# EUROPEAN PATENT APPLICATION

(11) **EP 2 584 812 A1**
(43) Date of publication of application: **24.04.2013**
(21) Application number: 11798020.1
(22) Date of filing: 14.06.2011
(51) Int. Cl.: H04W 16/28, H04W 72/08

(54) **BASE STATION, MOBILE STATION, MEASUREMENT RESULT INFORMATION CONTROL METHOD**

(30) Priority: 21.06.2010 JP 2010141081
(71) Applicant: NTT DoCoMo, Inc., Tokyo 100-6150 (JP)
(72) Inventor: SAGAE, Yuta, Tokyo 100-6150 (JP); IWAMURA, Mikio, Tokyo 100-6150 (JP); YAGYU, Kengo, Tokyo 100-6150 (JP); ISHII, Hiroyuki, Tokyo 100-6150 (JP); NAKAMORI, Takeshi, Tokyo 100-6150 (JP)
(74) Representative: HOFFMANN EITLE
(86) International application number: PCT/JP2011/063618
(87) International publication number: WO 2011/162134

(57) **Abstract**

A base station capable of communications using plural component carriers includes a measurement result receiving unit configured to receive a measurement result of a reception condition from a mobile station, a determining unit configured to determine whether a change of a primary cell or a secondary cell allocated to the mobile station occurs based on the received measurement result, and an initializing unit configured to initialize information including the measurement result of the reception condition received from the mobile station for the component carrier corresponding to the primary cell or the secondary cell which is affected by the change.

## Description

### TECHNICAL FIELD

The present invention relates to a base station, a mobile station, and a method of controlling measurement result information.

### BACKGROUND ART

Currently, standardization of a radio system such as an LTE (Long Term Evolution) system is developed in 3GPP (3rd Generation Partnership Project).

In a radio system such as an LTE system, handover is performed to switch base stations or sectors for connection with movement of a mobile station. In handover, a band or sector to be connected is specified and the mobile station continues communications using the specified band or sector.

Upon handover, information including a measurement result stored in a base station and a mobile station is initialized. The information including the measurement result is managed in association with a MeasID (Measurement identity), which is used to manage a relationship between a Measurement Object indicating frequency information for use or the like and a Reporting configuration indicating a measurement and reporting scheme. Upon handover, a handover source base station transfers necessary information included in the MeasID to a handover target base station, and removes a variable VarMeasReport which is included in the MeasID stored in the handover source base station. Upon handover, the mobile station removes the MeasID stored in the mobile station (see 3GPP TS 36.331, V9.2.0 (2010-03), "5.5 Measurement").

### DISCLOSURE OF INVENTION

### [PROBLEM(S) TO BE SOLVED BY THE INVENTION]

In 3GPP, an LTE-A (LTE-Advanced) system is under discussion as a succeeding communication system of an LTE system. In the LTE-A system, carrier aggregation is used. When carrier aggregation is used, a mobile station can receive downlink signals simultaneously using plural carrier signals and transmit uplink signals simultaneously using plural carrier signals. Under the same base station, a carrier in a different sector can be used in a similar manner. Each carrier used in carrier aggregation is referred to as a CC (Component Carrier).

Plural component carriers are categorized into a main carrier referred to as a PCC (Primary Component Carrier) and the other carriers referred to as SCCs (Secondary Component Carriers). A sector of a base station to which a Primary Component Carrier is allocated is referred to as a main cell or a Pcell (Primary Cell) and a sector of the base station to which a Secondary Component Carrier is allocated is referred to as an auxiliary cell or a Scell (Secondary Cell).

When plural component carriers are used, a change of a Pcell or a Scell allocated to a mobile station may occur with movement of the mobile station. With the movement of the mobile station, a change of only the Pcell, only the Scell, or both of them may occur.

When all information (MeasIDs) including all measurement results stored in the base station and the mobile station is initialized every time a change of a Pcell or a Scell occurs, measurement information for a component carrier which is not affected by the change is also initialized. As a result, measurement processing by the mobile station and reception processing of a measurement result by the base station may increase.

It is a general object of the present invention to reduce measurement processing and transmission processing by a mobile station and reception processing of a measurement result by a base station when plural component carriers are used.

### [MEANS FOR SOLVING THE PROBLEM(S)]

In one aspect of the present invention, there is provided a base station capable of communications using plural component carriers, including:
a measurement result receiving unit configured to receive a measurement result of a reception condition from a mobile station;
a determining unit configured to determine whether a change of a primary cell or a secondary cell allocated to the mobile station occurs based on the received measurement result; and
an initializing unit configured to initialize information including the measurement result of the reception condition received from the mobile station for the component carrier corresponding to the primary cell or the secondary cell which is affected by the change.

In another aspect of the present invention, there is provided a mobile station capable of communications using plural component carriers, including:
a change information receiving unit configured to receive information about a change of a primary cell or a secondary cell; and
an initializing unit configured to initialize information including a measurement result of a reception condition for the component carrier corresponding to the primary cell or the secondary cell which is affected by the change.

In another aspect of the present invention, there is provided a method of controlling measurement result information in a base station capable of communications using plural component carriers, including the steps of:
receiving a measurement result of a reception condition from a mobile station;
determining whether a change of a primary cell or a secondary cell allocated to the mobile station occurs based on the received measurement result; and
initializing information including the measurement result of the reception condition received from the mobile station for the component carrier corresponding to the primary cell or the secondary cell which is affected by the change.

In another aspect of the present invention, there is provided a method of controlling measurement result information in a mobile station capable of communications using plural component carriers, including the steps of:
receiving information about a change of a primary cell or a secondary cell; and
initializing information including a measurement result of a reception condition for the component carrier corresponding to the primary cell or the secondary cell which is affected by the change.

### [ADVANTAGEOUS EFFECT OF THE INVENTION]

According to an embodiment of the present invention, it is possible to reduce measurement processing and transmission processing by a mobile station and reception processing of a measurement result by a base station when plural component carriers are used.

### BRIEF DESCRIPTION OF THE DRAWINGS

Fig. 1 shows a conceptual diagram of scenarios where a change of a Pcell or a Scell allocated to a mobile station occurs.
Fig. 2 shows a block diagram of a base station in accordance with an embodiment of the present invention.
Fig. 3 shows a block diagram of a mobile station in accordance with an embodiment of the present invention.
Fig. 4 shows a flowchart of a method of controlling a measurement result in a base station in accordance with an embodiment of the present invention.
Fig. 5 shows a flowchart of a method of controlling a measurement result in a mobile station in accordance with an embodiment of the present invention.
Fig. 6 shows a flowchart of a method of transmitting a measurement result in a mobile station in accordance with an embodiment of the present invention.
Fig. 7 shows a content of a MeasID used in the present system.

### DETAILED DESCRIPTION OF THE PREFERRED EMBODIMENTS

In an embodiment of the present invention, plural component carriers are used through carrier aggregation. A mobile station (UE: User Equipment) measures a reception condition for a component carrier and reports a measurement result (Measurement Report) of the reception condition to a base station. For example, information including the measurement result of the reception condition is managed by the mobile station in association with a MeasID.

The base station receives the measurement result (Measurement Report) of the reception condition from the mobile station. For example, information including the measurement result of the reception condition is managed by the base station in association with a MeasID. The base station determines whether a change of a Pcell or a Scell allocated to the mobile station occurs based on the received measurement result. For example, the base station determines whether a change of both the Pcell and at least one Scell allocated to the mobile station occurs, whether only a change of the Pcell allocated to the mobile station occurs, or only a change of at least one Scell allocated to the mobile station occurs. The base station initializes information (MeasID) including the measurement result for the component carrier corresponding to the Pcell or the Scell which is affected by the change. Then, the base station reports information about the change of the Pcell or the Scell to the mobile station.

The mobile station receives information about the change of the Pcell or the Scell from the base station and initializes information (MeasID) including the measurement result for the component carrier corresponding to the Pcell or the Scell which is affected by the change.

Embodiments of the present invention are described in detail below with reference to the accompanying drawings.

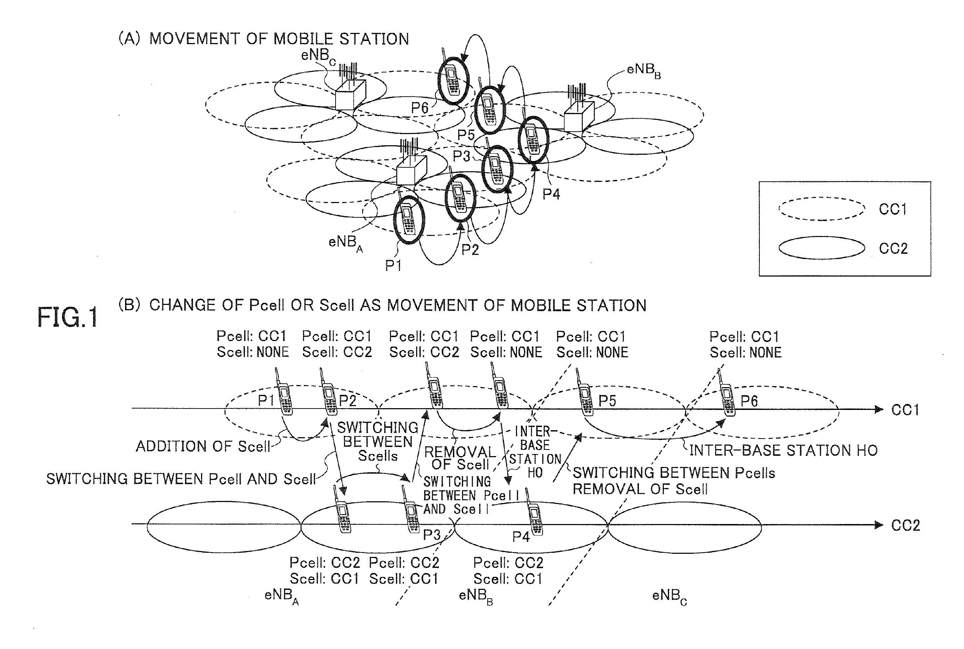

Fig. 1 shows a conceptual diagram of scenarios where a change of a Pcell (Primary Cell) or a Scell (Secondary Cell) allocated to a mobile station occurs. Fig. 1(A) shows the movement of the mobile station. There are three base stations (eNB_{A}, eNB_{B}, eNB_{C}), each of which uses two component carriers (CC1, CC2). When the mobile station moves around the cells covered by these two component carriers, a change of the Pcell or the Scell allocated to the mobile station occurs.

Fig. 1(B) shows scenarios where a change of the Pcell or the Scell occurs with the movement of the mobile station. In a position P1, the mobile station is situated in a cell covered by a component carrier CC1 of the base station eNB_{A}. In this position P1, the component carrier CC1 is assigned to the Pcell as a primary component carrier (PCC). Since the reception condition of the component carrier CC2 is poor, the mobile station does not assign the component carrier CC2 to the Scell as a secondary component carrier (SCC). When the mobile station moves to a position P2 where the reception condition of the component carrier CC2 is good, the component carrier CC2 is assigned to the Scell as the secondary component carrier.

When the reception condition of the component carrier CC2 is better than the reception condition of the component carrier CC1 in the process of the movement of the mobile station to a position P3, switching between the primary component carrier and the secondary component carrier takes place. Then, the component carrier CC2 is assigned to the Pcell and the component carrier CC1 is assigned to the Scell. When the mobile station moves to the position P3 and crosses the boundary between sectors of the component carrier CC1, the secondary component carrier CC1 is updated and assigned to the Scell.

When the reception condition of the component carrier CC1 is better than the reception condition of the component carrier CC2 in the process of the movement of the mobile station to a position P4, switching between the primary component carrier and the secondary component carrier takes place. Then, the component carrier CC1 is assigned to the Pcell as a primary component carrier and the component carrier CC2 is assigned to the Scell as a secondary component carrier. When the reception condition of the component carrier CC2 is poor in the process of the movement of the mobile station to the position P4, the component carrier CC2 is removed (unassigned) from the Scell.

When the mobile station moves to the position P4 and the reception condition of a component carrier of the base station eNB_{B} becomes better, the mobile station performs handover from the base station eNB_{A} to the base station eNB_{B}. It is assumed that the mobile station can use the component carriers CC1 and CC2 of the base station eNB_{B} and the reception condition of the component carrier CC2 is better than the reception condition of the component carrier CC1. In this assumption, the component carrier CC2 is assigned to the Pcell as a primary component carrier and the component carrier CC1 is assigned to the Scell as a secondary component carrier.

When the mobile station moves to a position P5 and the reception condition of the component carrier CC2 becomes poor, the component carrier CC1 is assigned to the Pcell as a primary component carrier and the component carrier is removed from the Scell.

When the mobile station moves to a position P6 and the reception condition of a component carrier of the base station eNB_{C} becomes better, the mobile station performs handover from the base station eNB_{B} to the base station eNB_{C}. It is assumed that the mobile station can use the component carrier CC1 of the base station eNB_{C}. In this assumption, the component carrier CC1 is assigned to the Pcell as a primary component carrier.

It should be noted that a change (assignment or removal) of a component carrier takes place by measuring, by the mobile station, the reception condition according to a parameter such as a measurement and reporting scheme, a threshold, or the like specified in advance by the base station, reporting a measurement result to the base station, and determining, by the base station, a change of the Pcell or the Scell.

As described above, a change (addition, modification, or removal) of a Pcell or a Scell occurs with the movement of the mobile station. Specifically, there are four scenarios.
(1) A change of the Pcell or the Scell allocated to the mobile station occurs due to inter-base station handover (such as inter-base station HO shown in Fig. 1(B)).
(2) A change of the Pcell and at least one Scell allocated to the mobile station occurs within the same base station (such as switching between Pcell and Scell and switching between Pcells shown in Fig. 1(B)).
(3) Only a change of the Pcell allocated to the mobile station occurs within the same base station.
(4) Only a change of at least one Scell allocated to the mobile station occurs within the same base station (such as switching between Scells and removal of Scell shown in Fig. 1(B)).

Every time a change of a Pcell or a Scell occurs, the base station reports a parameter (RRC Connection Reconfiguration) such as a measurement and reporting scheme, a threshold, or the like to the mobile station.

In the embodiment of the present invention, when a change of a Pcell or a Scell occurs, the base station and the mobile station initialize information (MeasID) including a measurement result for a component carrier which is affected by the change, rather than initialize all information (MeasIDs) including all measurement results stored in the base station and the mobile station.

More specifically, the base station selects a MeasID to be initialized according to a content of a measurement result (Measurement Report) received from the mobile station and initializes only the selected MeasID. Information regarding MeasID for a component carrier which is not affected by the change is not removed. In addition, when only an addition of a Scell occurs, information regarding MeasID is not removed. Then, the base station reports information about the change of the Pcell or the Scell to the mobile station.

The mobile station also selects a MeasID to be initialized according to the information about the change of the Pcell or the Scell received from the base station and initializes only the selected MeasID. Information regarding MeasID for a component carrier which is not affected by the change is not removed. In addition, when only an addition of a Scell occurs, information regarding MeasID is not removed. The mobile station measures a reception condition for each component carrier according to the RRC Connection Reconfiguration and transmits a measurement result (Measurement Report) to the base station. It should be noted that the mobile station may combine measurement results of a Pcell candidate and plural Scell candidates and transmits them as a Measurement Report.

Although Fig. 1 shows two component carriers, more than two component carriers may be used. In addition, the number of secondary component carriers is not limited to zero or one, but may be two or more. For example, a component carrier CC3 is additionally used in Fig. 1 and the component carriers CC2 and CC3 may be assigned to the Scells allocated to the mobile station. It should be noted that a change of a Pcell means switching or handover of the Pcell and a change of a Scell means switching, handover, an addition or a removal of the Scell.

### <Configuration of a base station and a mobile station>

Next, a base station in accordance with an embodiment of the present invention is described below.

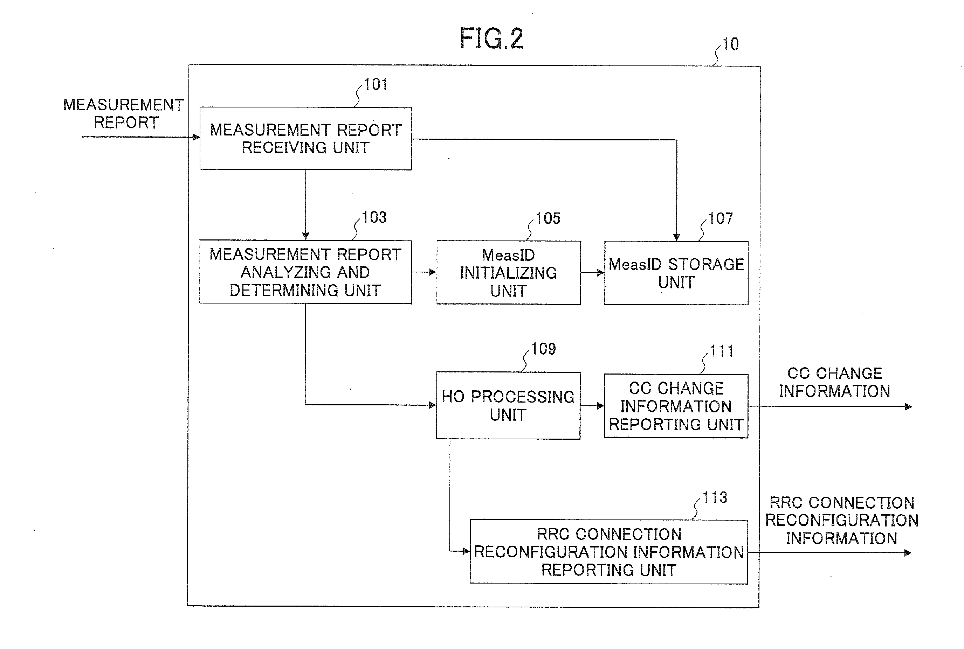

Fig. 2 shows a block diagram of a base station in accordance with an embodiment of the present invention. The base station 10 includes a Measurement Report receiving unit 101, a Measurement Report analyzing and determining unit 103, a MeasID initializing unit 105, a MeasID storage unit 107, a handover (HO) processing unit 109, a component carrier (CC) change information reporting unit 111, and an RRC Connection Reconfiguration information reporting unit 113.

The Measurement Report receiving unit 101 receives a measurement result (Measurement Report) of a reception condition from a mobile station. When the Measurement Report receiving unit 101 receives the Measurement Report, the Measurement Report receiving unit 101 stores, in association with a MeasID, information including the measurement result for the corresponding component carrier in the MeasID storage unit 107.

The Measurement Report analyzing and determining unit 103 determines whether a change of a Pcell or a Scell allocated to the mobile station occurs based on the received measurement result (Measurement Report). More specifically, the Measurement Report analyzing and determining unit 103 determines (1) whether inter-base station handover occurs, (2) whether a change of the Pcell and at least one Scell allocated to the mobile station occurs within the same base station, (3) whether only a change of the Pcell allocated to the mobile station occurs within the same base station, or (4) whether only a change of at least one Scell allocated to the mobile station occurs within the same base station.

As described above, the base station manages component carriers available to the mobile station using MeasIDs. The Measurement Report analyzing and determining unit 103 can determine a Pcell or a Scell allocated to the mobile station using the MeasIDs.

The MeasID initializing unit 105 initializes information (MeasID) including the measurement result for the component carrier corresponding to the Pcell or the Scell which is affected by the change.

When the Measurement Report analyzing and determining unit 103 determines that (1) inter-base station handover occurs, the MeasID initializing unit 105 initializes MeasIDs for all component carriers allocated to the mobile station, because all component carriers are re-allocated by a handover target base station due to inter-base station handover.

When the Measurement Report analyzing and determining unit 103 determines that (2) a change of the Pcell and at least one Scell allocated to the mobile station occurs within the same base station, the MeasID initializing unit 105 initializes MeasIDs for component carriers corresponding to the Pcell and the Scell which are affected by the change. For example, when the Scell associated with the Pcell is changed due to a change of the Pcell, the MeasID initializing unit 105 initializes MeasIDs for component carriers corresponding to the Pcell and the Scell. When some of plural Scells used by the mobile station are changed, only MeasIDs for component carriers corresponding to the Scells which are affected by the change are initialized, and MeasIDs for component carriers corresponding to Scells which are not affected by the change are not initialized. It should be noted that a difference (relative value) from the component carrier assigned to the Pcell can be used to determine a change of a Scell. For example, in order to calculate a measurement result in the mobile station, received quality (Reference Signal Received Power (RSRP) or Reference Signal Received Quality (RSRQ)) of a component carrier for a Scell candidate can be calculated relative to received quality of the component carrier for the Pcell. In this case, when the MeasID for the component carrier assigned to the Pcell is initialized, the MeasID for the component carrier to be assigned to the Scell (Scell candidate) cannot be used. Thus, upon a change of the Pcell, the MeasID initializing unit 105 initializes the MeasID for the component carrier assigned to the Pcell and also initializes the MeaID for the component carrier to be assigned to the Scell (Scell candidate) associated with the Pcell. It should be noted that plural Scells may be changed at the same time.

When the Measurement Report analyzing and determining unit 103 determines that (3) only a change of the Pcell allocated to the mobile station occurs within the same base station, the MeasID initializing unit 105 initializes a MeasID for the component carrier corresponding to the Pcell which is affected by the change. Since a change of the Scell does not occur, a MeasID for the component carrier corresponding to the Scell is not initialized. It should be noted that a difference (relative value) from the component carrier assigned to the Pcell can be used to determine a change of a Scell. For example, in order to calculate a measurement result in the mobile station, received quality of a component carrier for a Scell candidate can be calculated relative to received quality of the component carrier for the Pcell. In this case, when the MeasID for the component carrier assigned to the Pcell is initialized, the MeasID for the component carrier to be assigned to the Scell (Scell candidate) cannot be used. Thus, upon a change of the Pcell, the MeasID initializing unit 105 initializes the MeasID for the component carrier assigned to the Pcell and also initializes the MeaID for the component carrier to be assigned to the Scell (Scell candidate) associated with the Pcell.

When the Measurement Report analyzing and determining unit 103 determines that (4) only a change of at least one Scell allocated to the mobile station occurs within the same base station, the MeasID initializing unit 105 initializes a MeasID for the component carrier corresponding to the Scell which is affected by the change. Since a change of the Pcell does not occur, a MeasID for the component carrier corresponding to the Pcell is not initialized. When some of plural Scells used by the mobile station are changed, only MeasIDs for component carriers corresponding to the Scells which are affected by the change are initialized, and MeasIDs for component carriers corresponding to Scells which are not affected by the change are not initialized.

For example, a variable VarMeasReport which is included in the MeasID contains information including a measurement result (CellTriggeredList, numberOfReportsSent, and so on). When the Pcell or the Scell is removed, when switching between the Pcell and the Scell takes place, or when handover occurs, the MeasID initializing unit 105 removes information contained in the VarMeasReport from the MeasID storage unit 107. When the Pcell or the Scell is not removed, when switching between the Pcell and the Scell does not take place, or when handover does not occur, the MeasID initializing unit 105 does not remove information including the measurement result from the MeasID storage unit 107. In addition, when only an addition of a Scell occurs, the MeasID initializing unit 105 does not remove information including the measurement result from the MeasID storage unit 107.

The MeasID storage unit 107 stores information (MeasID) including the measurement result.

The HO processing unit 109 performs handover based on the received measurement result. It should be noted that handover includes inter-base station handover and a change of a Pcell or a Scell within the same base station. Upon inter-base station handover, the HO processing unit 109 may transfer necessary information stored in the MeasID storage unit 107 to a handover target base station.

The CC change information reporting unit 111 reports information about the change of the Pcell or the Scell (change of the component carrier) to the mobile station. The CC change information reporting unit 111 may report only the Pcell or the Scell to be changed. Alternatively, the CC change information reporting unit 111 may report a list of the Pcell or the Scell allocated to the mobile station. Alternatively, the CC change information reporting unit 111 may report that inter-base station handover occurs.

The RRC Connection Reconfiguration information reporting unit 113 reports a parameter (RRC Connection Reconfiguration) such as a measurement and reporting scheme to the mobile station. The RRC Connection Reconfiguration specifies a measurement timing of a reception condition, a transmission timing of a measurement result, or the like.

Next, a mobile station in accordance with an embodiment of the present invention is described below.

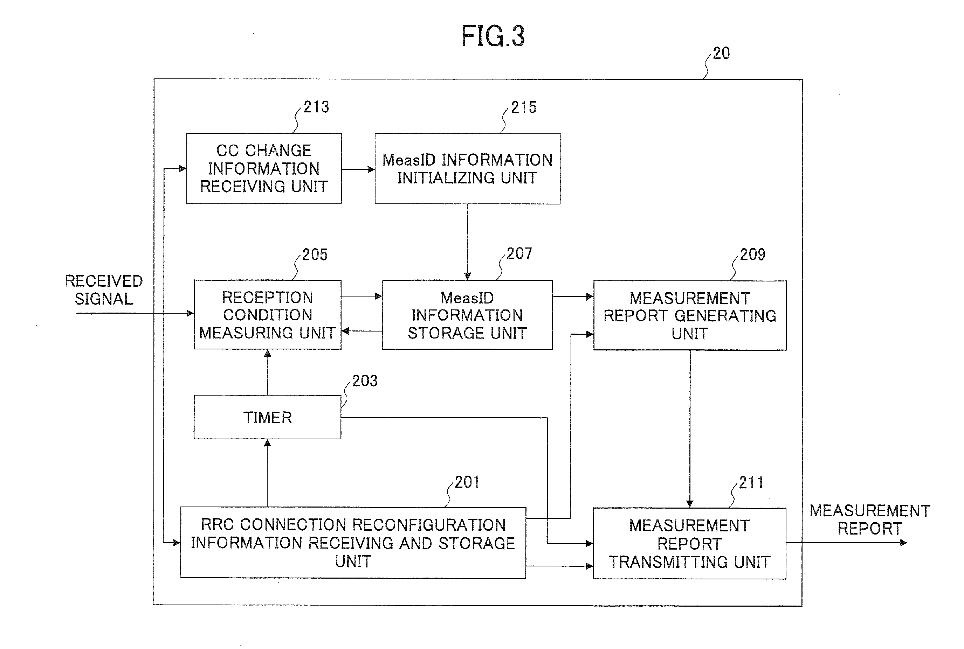

Fig. 3 shows a block diagram of a mobile station in accordance with an embodiment of the present invention. The mobile station 20 includes an RRC Connection Reconfiguration information receiving and storage unit 201, a timer 203, a reception condition measuring unit 205, a MeasID information storage unit 207, a Measurement Report generating unit 209, a Measurement Report transmitting unit 211, a component carrier (CC) change information receiving unit 213, and a MeasID information initializing unit 215.

The RRC Connection Reconfiguration information receiving and storage unit 201 receives a parameter (RRC Connection Reconfiguration) such as a measurement and reporting scheme from the base station. The RRC Connection Reconfiguration specifies a measurement timing of a reception condition, a transmission timing of a measurement result, or the like.

The timer 203 provides the measurement timing of the reception condition to the reception condition measuring unit 205 and provides the transmission timing of the measurement result to the Measurement Report transmitting unit 211.

At the measurement timing provided by the timer 203, the reception condition measuring unit 205 measures a reception condition for each component carrier according to the parameter (RRC Connection Reconfiguration) received from the base station. Although a term "reception condition" is used in this embodiment, a term such as received quality or radio quality may be used. For example, the reception condition measuring unit 205 may measure received quality (Reference Signal Received Power (RSRP) or Reference Signal Received Quality (RSRQ)) of a reference signal for each component carrier. When the reception condition measuring unit 205 measures the reception condition for the component carrier, the reception condition measuring unit 205 stores, in association with a MeasID, information including the measurement result for the corresponding component carrier in the MeasID information storage unit 207.

The MeasID information storage unit 207 stores information (MeasID) including the measurement result.

The Measurement Report generating unit 209 generates the measurement result of the reception condition in the form of Measurement Report according to the parameter (RRC Connection Reconfiguration) received from the base station.

The Measurement Report generating unit 209 may generate a Measurement Report either when the measurement result of the reception condition satisfies a predetermined condition or at a predetermined time interval. Alternatively, taking both of them into account, the Measurement Report generating unit 209 may generate a Measurement Report at a predetermined time interval as long as the measurement result of the reception condition satisfies a predetermined condition.

At the transmission timing provided by the timer 203, the Measurement Report transmitting unit 211 transmits the measurement result (Measurement Report) of the reception condition according to the parameter (RRC Connection Reconfiguration) received from the base station. The Measurement Report transmitting unit 211 may transmit the Measurement Report either when the measurement result of the reception condition satisfies a predetermined condition or at a predetermined time interval. Alternatively, taking both of them into account, the Measurement Report transmitting unit 211 may transmit the Measurement Report at a predetermined time interval as long as the measurement result of the reception condition satisfies a predetermined condition.

The Measurement Report transmitting unit 211 may also combine Measurement Reports for plural component carriers and transmits them as a single report. For example, (1) when inter-base station handover occurs, the Measurement Report transmitting unit 211 may transmit a report including a Measurement Report for a component carrier corresponding to a Pcell candidate and a Measurement Report for a component carrier corresponding to a Scell candidate. For example, (2) when a change of the Pcell or at least one Scell occurs within the same base station, the Measurement Report transmitting unit 211 may transmit a report including a Measurement Report for a component carrier corresponding to a Pcell candidate and a Measurement Report for a component carrier corresponding to a Scell candidate. For example, (3) when only a change of the Pcell occurs but a measurement result for a component carrier corresponding to a Scell is calculated based on a difference (relative value) from the measurement result for the component carrier corresponding to the Pcell, the Measurement Report transmitting unit 211 may transmit a report including a Measurement Report for the component carrier corresponding to the Pcell and a Measurement Report for a component carrier corresponding to a Scell candidate. For example, (4) when only a change of plural Scells occurs within the same base station, the Measurement Report transmitting unit 211 may combine Measurement Reports for component carriers corresponding to the plural Scells and transmits them as a single report.

The CC change information receiving unit 213 receives information (component carrier change information) about a change of a Pcell or a Scell from the base station. The information about a change of a Pcell or a Scell may be information about only a Pcell or a Scell to be changed. Alternatively, the information about a change of a Pcell or a Scell may be a list of a Pcell or a Scell allocated to the mobile station. Alternatively, the information about a change of a Pcell or a Scell may indicate that inter-base station handover occurs.

The MeasID information initializing unit 215 initializes information (MeasID) including the measurement result for a component carrier corresponding to the Pcell or the Scell which is affected by the change.

When the component carrier change information indicates that (1) inter-base station handover occurs, the MeasID information initializing unit 215 initializes MeasIDs for all component carriers, because all component carriers are re-allocated by a handover target base station due to inter-base station handover.

When the component carrier change information indicates that (2) a change of the Pcell and at least one Scell occurs within the same base station, the MeasID information initializing unit 215 initializes MeasIDs for component carriers corresponding to the Pcell and the Scell which are affected by the change. For example, when the Scell associated with the Pcell is changed due to a change of the Pcell, the MeasID information initializing unit 215 initializes MeasIDs for component carriers corresponding to the Pcell and the Scell. When some of plural Scells used by the mobile station are changed, only MeasIDs for component carriers corresponding to the Scells which are affected by the change are initialized, and MeasIDs for component carriers corresponding to Scells which are not affected by the change are not initialized. It should be noted that a difference (relative value) from the component carrier assigned to the Pcell can be used to determine a change of a Scell. For example, in order to calculate a measurement result in the mobile station, received quality of a component carrier for a Scell candidate can be calculated relative to received quality of the component carrier for the Pcell. In this case, when the MeasID for the component carrier assigned to the Pcell is initialized, the MeasID for the component carrier to be assigned to the Scell (Scell candidate) cannot be used. Thus, upon a change of the Pcell, the MeasID information initializing unit 215 initializes the MeasID for the component carrier assigned to the Pcell and also initializes the MeaID for the component carrier to be assigned to the Scell (Scell candidate) associated with the Pcell. It should be noted that plural Scells may be changed at the same time.

When the component carrier change information indicates that (3) only a change of the Pcell occurs within the same base station, the MeasID information initializing unit 215 initializes a MeasID for the component carrier corresponding to the Pcell which is affected by the change. Since a change of the Scell does not occur, a MeasID for the component carrier corresponding to the Scell is not initialized. It should be noted that a difference (relative value) from the component carrier assigned to the Pcell can be used to determine a change of a Scell. For example, in order to calculate a measurement result in the mobile station, received quality of a component carrier for a Scell candidate can be calculated relative to received quality of the component carrier for the Pcell. In this case, when the MeasID for the component carrier assigned to the Pcell is initialized, the MeasID for the component carrier to be assigned to the Scell (Scell candidate) cannot be used. Thus, upon a change of the Pcell, the MeasID information initializing unit 215 initializes the MeasID for the component carrier assigned to the Pcell and also initializes the MeaID for the component carrier to be assigned to the Scell (Scell candidate) associated with the Pcell.

When the component carrier change information indicates that (4) only a change of at least one Scell occurs within the same base station, the MeasID information initializing unit 215 initializes a MeasID for the component carrier corresponding to the Scell which is affected by the change. Since a change of the Pcell does not occur, a MeasID for the component carrier corresponding to the Pcell is not initialized. When some of plural Scells used by the mobile station are changed, only MeasIDs for component carriers corresponding to the Scells which are affected by the change are initialized, and MeasIDs for component carriers corresponding to Scells which are not affected by the change are not initialized.

For example, a variable VarMeasReport which is included in the MeasID contains information including a measurement result (CellTriggeredList, numberOfReportsSent, and so on). When the Pcell or the Scell is removed, when switching between the Pcell and the Scell takes place, or when handover occurs, the MeasID information initializing unit 215 removes information contained in the VarMeasReport from the MeasID information storage unit 207. When the Pcell or the Scell is not removed, when switching between the Pcell and the Scell does not take place, or when handover does not occur, the MeasID information initializing unit 215 does not remove information including the measurement result from the MeasID information storage unit 207. In addition, when only an addition of a Scell occurs, the MeasID information initializing unit 215 does not remove information including the measurement result from the MeasID information storage unit 207.

### <Operation of a base station and a mobile station>

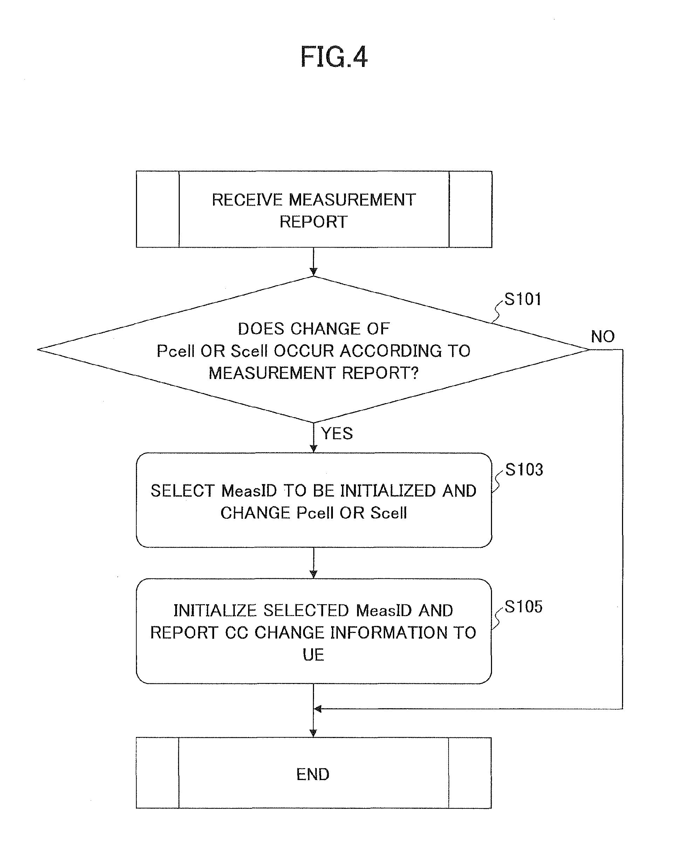

Fig. 4 shows a flowchart of a method of controlling a measurement result in a base station in accordance with an embodiment of the present invention.

When the Measurement Report receiving unit 101 receives a Measurement Report from a mobile station, the Measurement Report analyzing and determining unit 103 determines whether a change of a Pcell or a Scell allocated to the mobile station occurs based on the Measurement Report (S101).

More specifically, the Measurement Report analyzing and determining unit 103 determines (1) whether inter-base station handover occurs, (2) whether a change of the Pcell and at least one Scell allocated to the mobile station occurs within the same base station, (3) whether only a change of the Pcell allocated to the mobile station occurs within the same base station, or (4) whether only a change of at least one Scell allocated to the mobile station occurs within the same base station.

When a change of a Pcell or a Scell occurs, the MeasID initializing unit 105 selects a MeasID for the component carrier corresponding to the Pcell or the Scell which is affected by the change, and the HO processing unit 109 changes the Pcell or the Scell (S103).

More specifically, when the Measurement Report analyzing and determining unit 103 determines that (1) inter-base station handover occurs, the MeasID initializing unit 105 selects MeasIDs for all component carriers allocated to the mobile station. The HO processing unit 109 performs inter-base station handover.

When the Measurement Report analyzing and determining unit 103 determines that (2) a change of the Pcell and at least one Scell allocated to the mobile station occurs within the same base station, the MeasID initializing unit 105 selects MeasIDs for component carriers corresponding to the Pcell and the Scell which are affected by the change. The HO processing unit 109 changes the Pcell and the at least one Scell.

When the Measurement Report analyzing and determining unit 103 determines that (3) only a change of the Pcell allocated to the mobile station occurs within the same base station, the MeasID initializing unit 105 selects a MeasID for the component carrier corresponding to the Pcell which is affected by the change. The HO processing unit 109 changes the Pcell.

When the Measurement Report analyzing and determining unit 103 determines that (4) only a change of at least one Scell allocated to the mobile station occurs within the same base station, the MeasID initializing unit 105 selects a MeasID for the component carrier corresponding to the at least one Scell which is affected by the change. The HO processing unit 109 changes the at least one Scell.

The MeasID initializing unit 105 initializes the selected MeasID and the CC change information reporting unit 111 reports information about the change of the Pcell or the Scell to the mobile station (S105). More specifically, the MeasID initializing unit 105 removes the MeasID for the removed component carrier from the MeasID storage unit 107.

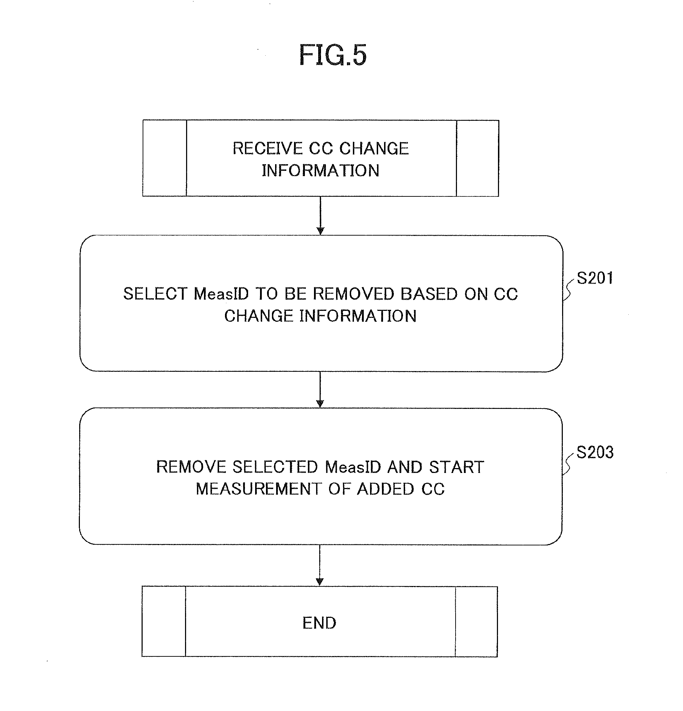

Fig. 5 shows a flowchart of a method of controlling a measurement result in a mobile station in accordance with an embodiment of the present invention.

When the CC change information receiving unit 213 receives component carrier change information from the base station, the MeasID information initializing unit 215, based on information about a change of a Pcell or a Scell, selects a MeasID for the component carrier corresponding to the Pcell or the Scell which is affected by the change (S201).

More specifically, when the component carrier change information indicates that (1) inter-base station handover occurs, the MeasID information initializing unit 215 selects MeasIDs for all component carriers, because all component carriers allocated to the mobile station are removed.

When the component carrier change information indicates that (2) a change of the Pcell and at least one Scell occurs within the same base station, the MeasID information initializing unit 215 selects MeasIDs for component carriers corresponding to the Pcell and the at least one Scell which are affected by the change, because the component carriers corresponding to the Pcell and the at least one Scell allocated to the mobile station are removed.

When the component carrier change information indicates that (3) only a change of the Pcell occurs within the same base station, the MeasID information initializing unit 215 selects a MeasID for the component carrier corresponding to the Pcell which is affected by the change, because the component carrier corresponding to the Pcell allocated to the mobile station is removed.

When the component carrier change information indicates that (4) only a change of at least one Scell occurs within the same base station, the MeasID information initializing unit 215 selects a MeasID for the component carrier corresponding to the at least one Scell which is affected by the change, because the component carrier corresponding to the at least one Scell allocated to the mobile station is removed.

The MeasID information initializing unit 215 initializes the selected MeasID and the reception condition measuring unit 205 starts measurement of a component carrier (S203). More specifically, the MeasID information initializing unit 215 removes the MeasID for the removed component carrier and measures a reception condition of an added component carrier (a new component carrier to be used or a re-allocated component carrier).

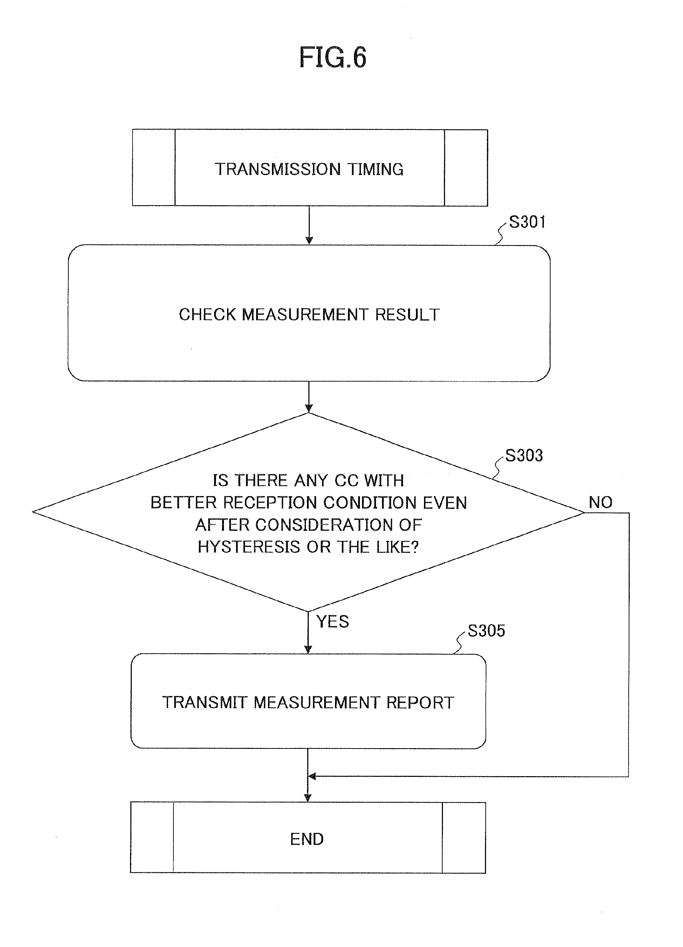

Fig. 6 shows a flowchart of a method of transmitting a measurement result in a mobile station in accordance with an embodiment of the present invention.

Before the start of the operations shown in Fig. 6, it is assumed that the reception condition measuring unit 205 measures a reception condition (RSRP, RSRQ, or the like) and stores a MeasID in the MeasID information storage unit 207. At a predetermined transmission timing, the Measurement Report generating unit 209 checks the measurement result measured by the reception condition measuring unit 205 (S301).

The Measurement Report generating unit 209 determines whether the measurement result of the reception condition satisfies a predetermined condition (S303). For example, the Measurement Report generating unit 290 determines whether a component carrier with a better reception condition exists even after consideration of hysteresis or the like.

When a component carrier with a better reception condition exists, the Measurement Report generating unit 209 generates information about the component carrier in the form of a Measurement Report, and then the Measurement Report transmitting unit 211 transmits the Measurement Report to the base station (S305). The Measurement Report transmitting unit 211 may combine Measurement Reports for plural Pcell candidates and plural Scell candidates and transmit them as a single report. In the flowchart shown in Fig. 6, the Measurement Report generating unit 209 and the Measurement Report transmitting unit 211 respectively generate and transmit a Measurement Report when the measurement result of the reception condition satisfies the predetermined condition. Alternatively, the Measurement Report generating unit 209 and the Measurement Report transmitting unit 211 may respectively generate and transmit a Measurement Report at a predetermined time interval. Alternatively, the Measurement Report generating unit 209 and the Measurement Report transmitting unit 211 may respectively generate and transmit a Measurement Report at a predetermined time interval as long as the measurement result of the reception condition satisfies the predetermined condition.

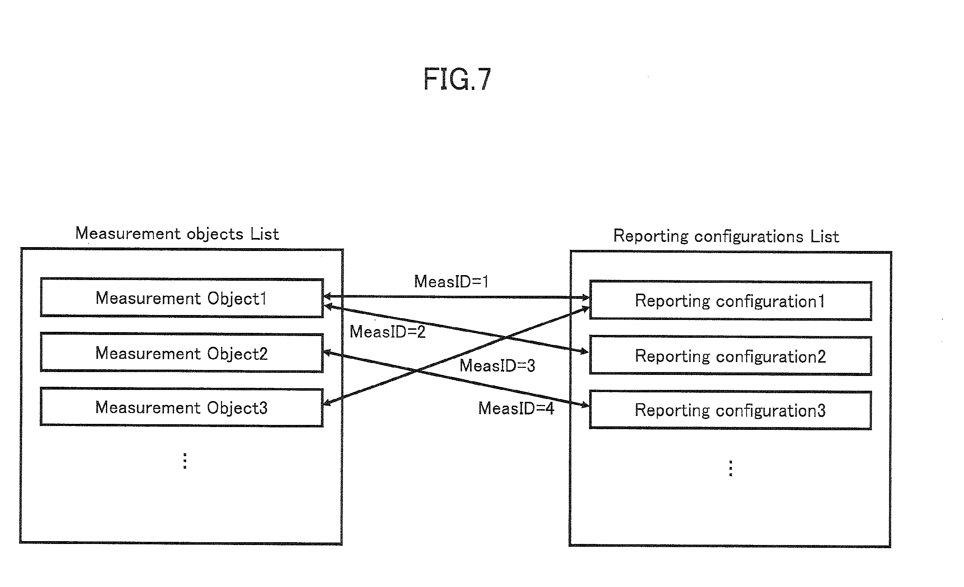

Next, a MeasID used in the present system is described in detail below with reference to Fig. 7. A MeasID shown in Fig. 7 is used in an LTE system or an LTE-A system, for example. As described above, information including a measurement result measured by a mobile station is managed in association with a MeasID in both the mobile station and the base station. The MeasID links between a Measurement Object indicating frequency information for use or the like and a Reporting configuration indicating a measurement and reporting scheme in a one-to-one relationship. The Measurement Object includes an offset value, a black-list cell, or the like. The Reporting configuration includes how to measure a reception condition and how to report a measurement result. When plural component carriers are used in a mobile station, plural MeasIDs are maintained. A mobile station transmits a Measurement Report for each MeasID to the base station. When the base station receives the Measurement Report, the base station updates the MeasID corresponding to the Measurement Report. In this manner, the MeasID may be managed in both the mobile station and the base station.

### <Effects of embodiments of the present invention>

In the embodiment of the present invention, when a change of a Pcell or a Scell occurs, the base station and the mobile station initialize information (MeasID) including a measurement result for a component carrier assigned to the Pcell or the Scell which is affected by the change, rather than initialize all information (MeasIDs) including all measurement results stored in the base station and the mobile station. Thus, information including a measurement result for a component carrier assigned to a Pcell or a Scell which is not affected by the change is not removed. As a result, it is possible to reduce measurement processing and transmission processing by the mobile station and reception processing of a measurement result by a base station.

According to an approach where all information (MeasIDs) including all measurement results stored in the base station and the mobile station is initialized upon a change of a Pcell or a Scell, the mobile station needs to measure reception conditions of all component carriers and report them to the base station. As a result, it is expected that overhead will increase due to an increase in a frequency of control from the base station to the mobile station, an increase in processing in the mobile station, an increase of control signals, and so on.

According to the embodiment of the present invention, on the other hand, information including a measurement result for a component carrier which is not affected by the change is not initialized. As a result, unnecessary processing such as generating and reporting unnecessary Measurement Reports can be reduced. For example, when a change of a Pcell does not occur but only a change of a Scell occurs (when a secondary component carrier is added, when a secondary component carrier is removed, when switching or handover between secondary component carriers takes place, or the like), the MeasID for the primary component carrier is not initialized. Thus, the previous measurement result for the component carrier assigned to the Pcell can be used and accordingly, unnecessary processing can be reduced.

For convenience of explanation, a base station and a mobile station according to the embodiments of the present invention have been described with reference to functional block diagrams, but the base station and the mobile station may be implemented in hardware, software, or combinations thereof. In addition, two or more embodiments or modifications may be combined as appropriate.

While the embodiments of the present invention are described above, the present invention is not limited to the these embodiments, and variations, modifications, alterations, and substitutions can be made by those skilled in the art without deviating from the spirit of the present invention.

The present international application claims priority from Japanese Patent Application No. 2010-141081 filed on June 21, 2010, the entire contents of which are hereby incorporated herein by reference.

### [DESCRIPTION OF NOTATIONS]

10 base station
101 Measurement Report receiving unit
103 Measurement Report analyzing and determining unit
105 MeasID initializing unit
107 MeasID storage unit
109 HO processing unit
111 CC change information reporting unit
113 RRC Connection Reconfiguration information reporting unit
20 mobile station
201 RRC Connection Reconfiguration information receiving and storage unit
203 timer
205 reception condition measuring unit
207 MeasID information storage unit
209 Measurement Report generating unit
211 Measurement Report transmitting unit
213 component carrier (CC) change information receiving unit
215 MeasID information initializing unit

## Claims

1. A base station capable of communications using plural component carriers, comprising:
a measurement result receiving unit configured to receive a measurement result of a reception condition from a mobile station;
a determining unit configured to determine whether a change of a primary cell or a secondary cell allocated to the mobile station occurs based on the received measurement result; and
an initializing unit configured to initialize information including the measurement result of the reception condition received from the mobile station for the component carrier corresponding to the primary cell or the secondary cell which is affected by the change.

2. The base station as claimed in Claim 1,
wherein
when the determining unit determines that a change of both the primary cell and at least one secondary cell allocated to the mobile station occurs, the initializing unit initializes information including the measurement result for the component carriers corresponding to the primary cell and the at least one secondary cell which are affected by the change.

3. The base station as claimed in Claim 1,
wherein
when the determining unit determines that only a change of the primary cell allocated to the mobile station occurs, the initializing unit initializes information including the measurement result for the component carrier corresponding to the primary cell which is affected by the change.

4. The base station as claimed in Claim 2,
wherein
when the measurement result for the component carrier corresponding to the secondary cell which is received from the mobile station is calculated based on a difference from the measurement result for the component carrier corresponding to the primary cell, the initializing unit initializes information including the measurement result for the component carrier corresponding to the primary cell and also initializes information including the measurement result for the component carrier corresponding to the secondary cell associated with the primary cell.

5. The base station as claimed in Claim 1,
wherein
when the determining unit determines that only a change of at least one secondary cell allocated to the mobile station occurs, the initializing unit initializes information including the measurement result for the component carrier corresponding to the at least one secondary cell which is affected by the change.

6. The base station as claimed in Claim 1,
wherein
the determining unit further determines whether inter-base station handover occurs, and
when the determining unit determines that the inter-base station handover occurs, the initializing unit initializes information including measurement results for all the component carriers allocated to the mobile station.

7. The base station as claimed in Claim 1, further comprising:
a reporting unit configured to report the change of the primary cell or the secondary cell to the mobile station.

8. A mobile station capable of communications using plural component carriers, comprising:
a change information receiving unit configured to receive information about a change of a primary cell or a secondary cell; and
an initializing unit configured to initialize information including a measurement result of a reception condition for the component carrier corresponding to the primary cell or the secondary cell which is affected by the change.

9. The mobile station as claimed in Claim 8, wherein
when the change information receiving unit receives information indicating that a change of both the primary cell and at least one secondary cell occurs, the initializing unit initializes information including the measurement result for the component carriers corresponding to the primary cell and the at least one secondary cell which are affected by the change.

10. The mobile station as claimed in Claim 8, wherein
when the change information receiving unit receives information indicating that only a change of the primary cell occurs, the initializing unit initializes information including the measurement result for the component carrier corresponding to the primary cell which is affected by the change.

11. The mobile station as claimed in Claim 9, wherein
when the measurement result for the component carrier corresponding to the secondary cell is calculated based on a difference from the measurement result for the component carrier corresponding to the primary cell, the initializing unit initializing information including the measurement result for the component carrier corresponding to the primary cell and also initializes information including the measurement result for the component carrier corresponding to the secondary cell associated with the primary cell.

12. The mobile station as claimed in Claim 8, wherein
when the change information receiving unit receives information indicating that only a change of at least one secondary cell occurs, the initializing unit initializes information including the measurement result for the component carrier corresponding to the at least one secondary cell which is affected by the change.

13. The mobile station as claimed in Claim 8, wherein
when the change information receiving unit receives information indicating that inter-base station handover occurs, the initializing unit initializes information including measurement results for all the component carriers.

14. The mobile station as claimed in Claim 8, further comprising:
a receiving unit configured to receive a parameter related to measurement of a reception condition and transmission of the measurement result;
a measuring unit configured to measure the reception condition for each of the component carriers according to the received parameter; and
a transmitting unit configured to transmit the measurement result according to the received parameter.

15. A method of controlling measurement result information in a base station capable of communications using plural component carriers, comprising the steps of:
receiving a measurement result of a reception condition from a mobile station;
determining whether a change of a primary cell or a secondary cell allocated to the mobile station occurs based on the received measurement result; and
initializing information including the measurement result of the reception condition received from the mobile station for the component carrier corresponding to the primary cell or the secondary cell which is affected by the change.

16. A method of controlling measurement result information in a mobile station capable of communications using plural component carriers, comprising the steps of:
receiving information about a change of a primary cell or a secondary cell; and
initializing information including a measurement result of a reception condition for the component carrier corresponding to the primary cell or the secondary cell which is affected by the change.
